# EUROPÄISCHE PATENTSCHRIFT

(11) **EP 0 385 147 B1**
(45) Veröffentlichungstag und Bekanntmachung des Hinweises auf die Patenterteilung: **28.06.1995**
(21) Anmeldenummer: 90102368.9
(22) Anmeldetag: 07.02.1990
(51) Int. Cl.: H04Q 7/06, G08G 1/09, G08B 3/10

(54) **Einrichtung zur Empfangsbereitschaftskontrolle von Warnfunkempfängern**
Apparatus for controlling the reception capacity of radio alarm receivers
Dispositif pour le contrôle de disponibilité en réception d'un récepteur d'alerte

(30) Priorität: 03.03.1989 DE 3906780
(43) Veröffentlichungstag der Anmeldung: 05.09.1990
(73) Patentinhaber: Blaupunkt-Werke GmbH, 31132 Hildesheim (DE)
(72) Erfinder: Messerschmidt, Rudolf, D-3226 Sibbesse (DE); Schlabe, Gerolf, D-3200 Hildesheim (DE)

(56) Entgegenhaltungen:
- DE-A- 2 229 796
- DE-A- 3 211 813

## Beschreibung

Die Erfindung bezieht sich auf die im Oberbegriff des Anspruchs 1 näher definierten Einrichtungen zur Empfangsbereitschaftskontrolle von Warnfunkempfängern.

In der deutschen Patentschrift 32 11 813 ist eine entsprechende Einrichtung beschrieben, die nicht nur auf die Aussendung einer Warnfunkmeldung und einer dieser zugeordneten Kennfrequenz auf einem Hilf sträger wartet, sondern auch den Empfang einer Kennfrequenz für die Verkehrsdurchsagen überwacht und bei Empfang dieser Kennfrequenzen eine Schaltuhr oder einen anderen Zeitgeber auf Null zurücksetzt. Ist die Schaltuhr innerhalb von 24 Stunden nicht auf Null zurückgesetzt worden, dann veranlaßt die Schaltuhr eine Fehleranzeige.

Diese Einrichtung geht von der Überlegung aus, daß Verkehrsdurchsagen mehrfach am Tage ausgestrahlt werden. Solange die Schaltuhr durch die Kennfrequenzen der Verkehrsdurchsagen auf Null zurückgesetzt wird, ist der Warnfunkempfänger auch empfangsbereit für jede Warnmeldung, die durch eine andere, aber nur im Notfall ausgestrahlte Kennfrequenz gekennzeichnet ist.

Die Totzeit der Einrichtung beträgt 24 Stunden. Diese bekannte Anlage ist nicht geeignet, andere Kennungen als Kennfrequenzen zu verarbeiten. Bei der bekannten Anlage zeigt es sich als nachteilig, daß keine Unterscheidung möglich ist, ob der Empfänger fehlerhaft ist oder ob doch zufällig während der letzten 24 Stunden keine Verkehrsdurchsagen ausgestrahlt wurden.

Der vorliegenden Erfindung lag die Aufgabe zugrunde, eine Einrichtung zu schaffen, die auf andere Kennsignale reagiert und praktisch keine Totzeit aufweist und eine eindeutige Aussage über einen fehlerhaften Empfänger gestattet.

Eine Einrichtung gemäß der Erfindung unterscheidet sich durch die im Kennzeichen des Anspruchs 1 aufgeführten Merkmale vom Stand der Technik.

In den Unteransprüchen sind erfinderische Weiterbildungen des Gegenstandes des Hauptanspruches gekennzeichnet.

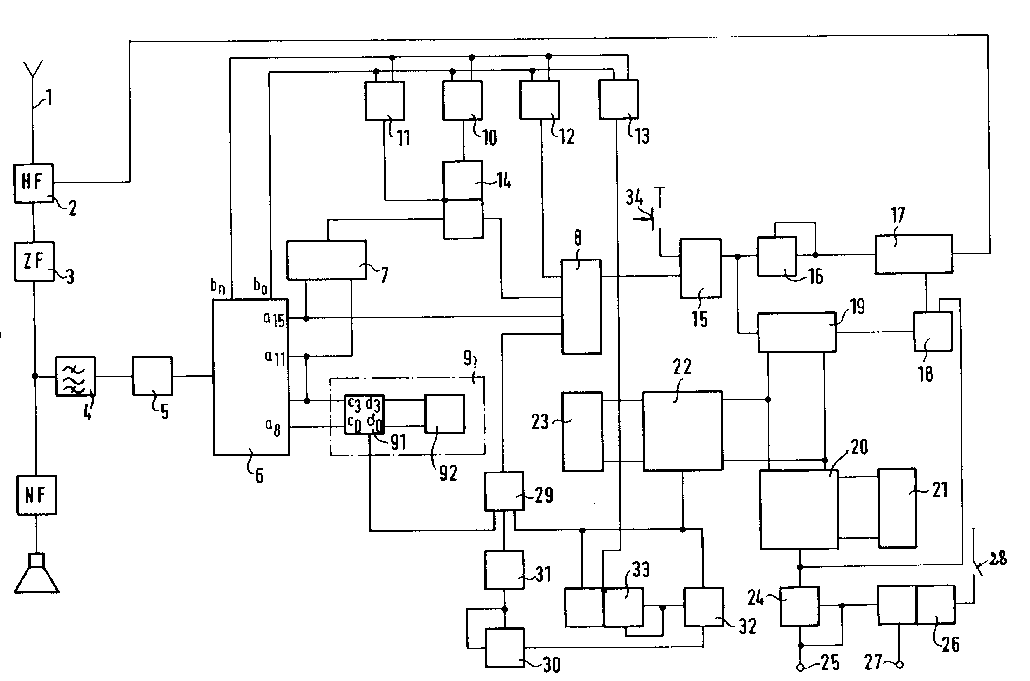

In der Zeichnung ist in der
- Figur 1: ein Blockschaltbild eines Ausführungsbeispiels der erfindungsgemäßen Einrichtung

dargestellt, das im folgenden erläutert ist und anhand dessen die Arbeitsweise der Einrichtung näher dargelegt wird.

Das dargestellte Ausführungsbeispiel der Einrichtung zur Überwachung der Empfangsbereitschaft von Warnfunkempfängern ist an einen UKW-Rundfunkempfänger angeschlossen, der über eine Antenne 1 den Träger desjenigen Senders aufnimmt, der mittels des Tuners 2 eingestellt ist. Die dem Träger aufmodulierten Signale werden in der ZF-Stufe von dem Träger getrennt. Am Ausgang der ZF-Stufe 3 steht das übliche MPX-Signal, das alle Informationen umfaßt, zur Verfügung.

Ein 57-kHz-Filter 4 entnimmt dem MPX-Signal die Signalanteile in der Nähe der 57-kHz-Hilfsträgerfrequenz. Hinter dem Eingang des Filters 4 liegt der Eingang der üblichen NF-Stufe, die den normalen Programmbeitrag, aber auch die Warnmeldungen des eingestellten Senders weiterverarbeitet und über den Lautsprecher hörbar macht.

Gehört der eingestellte Sender zu den Warnfunksendern, dann ist am Filterausgang ein Signal abnehmbar, das einen in der Amplitude modulierten 57-kHz-Hilfsträger darstellt, der bei der Übertragung selbst jedoch unterdrückt ist. Dieses Signal gehört zum Radiodatensystem = RDS.

Daher wird das Signal einem sich an das Filter 4 anschließenden RDS-Demodulator 5 bekannten Aufbaus zugeführt. Der RDS-Demodulator liefert bei Einstellung des Tuners 2 auf einen Warnfunksender einen kontinuierlichen Strom digitaler Daten, in denen bestimmte Datenblöcke mehr oder weniger häufig wiederholt sind, die z. B. den eingestellten Sender kennzeichnen, und andere Datenblöcke nur einmal enthalten sind.

Der Datenstrom aus dem Demodulator 5 wird von einem im Prinzip bekannten Blockdecoder 6 übernommen. In diesem Blockdecoder 6 werden die Datengruppen entschlüsselt, nachdem gegebenenfalls bei der Übertragung aufgetretene Fehler korrigiert wurden.

Die Informationsworte in den Datenblöcken stehen dann an den Ausgängen des Blockdecoders 6 als 16-Bit-breite Datenworte zur Verfügung. An einem weiteren Ausgang bₒ des Blockdecoders 16 ist der Blocktakt und an einem Ausgang bₙ die Nummer des Blocks abnehmbar. Jeweils vier Blöcke gehören zu einer Datengruppe, deren Kennzeichen jeweils im Block 2 an den Ausgängen a₁₁ bis a₁₅ abgreifbar ist. Diesen Ausgängen ist eine Torschaltung 7 nachgeschaltet, die ein Ausgangssignal liefert, wenn an ihren Eingängen das Kennzeichen der Gruppe 1A entsprechend dem Radiodatensystem anliegt. Die Gruppe 1A erscheint innerhalb des endlosen Datenstroms einmal pro Sekunde.

Der Ausgang a₁₅ des Blockdecoders 6 ist außerdem mit einem erste Eingang einer Torschaltung 8 verbunden, während die Ausgänge a₁₁, a₁₀, a₉ und a₈ an vier Eingänge cₒ bis c₃ einer Koinzidenzschaltung 91 in einem Warngebietsdecoder 9 angeschlossen sind. Weitere vier Eingänge dₒ bis d₃ dieser Koinzidenzschaltung sind mit einem Festwertspeicher 92 verbunden, in dem die Warngebietskennung als Vergleichswort abgelegt ist.

An die Blockdecoderausgänge bₒ und bₙ sind Takttore 10 bis 13 derart angeschlossen, daß das Takttor 10 einen zu dem ersten Block gehörenden Taktimpuls, das Takttor 11 einen dem zweiten Block zugeordneten Taktimpuls, das Takttor 12 einen zum dritten und das Takttor 13 einen zum vierten Block gehörenden Taktimpuls liefert.

Der Taktimpuls aus dem Takttor 10 wird als Resetimpuls an einen Steuer-Flip-Flop 14 gegeben, mit dessen Seteingang der Ausgang der Torschaltung 7 verbunden ist. Der Ausgang des Takttores 11 ist mit dem Übernahmeeingang des Steuer-Flip-Flops 14 verbunden. Der Ausgang des Steuer-Flip-Flops 14 ist auf einen zweiten Eingang der Torschaltung 8 geführt. Ein dritter Eingang dieser Torschaltung 8 ist an den Ausgang des Takttores 12 angeschlossen.

Der Ausgang der Torschaltung 8 ist über eine Oder-Schaltung 15 mit dem Eingang eines Zeitgebers 16 verbunden, dessen Ausgang auf einen Eingang einer Sendersuchlaufstartschaltung 17 geführt ist, der einen Suchlauf im Tuner 2 auf einen anderen Sender veranlaßt.

Ein Ausgang der Startschaltung 17, der am Ende eines jeden Sendersuchlaufzyklus einen Impuls liefert, ist über ein Und-Tor 18 mit einem Impulszähler 19 verbunden. Der Reseteingang des Impulszählers 19 ist an den Ausgang der Oder-Stufe 15 angeschlossen und liegt damit parallel zum Eingang des Zeitgebers 16.

Die n-Ausgänge des Impulszählers sind mit einer entsprechenden Anzahl von ersten Eingängen einer Fehlerkoinzidenzschaltung 20 verbunden, die zusätzlich eine entsprechende Anzahl n von zweiten Eingängen besitzt, an denen ein Fehlerfestwertspeicher 21 angeschlossen ist.

Der Ausgang der Fehlerkoinzidenzschaltung 20 führt zu dem zweiten Eingang des Und-Tores 18 und über eine Inverterstufe 24 auf einen ersten Fehlerausgang 25. Parallel zu diesem ersten Fehlerausgang liegt der Seteingang eines Fehler-Flip-Flops 26, das einen zweiten Fehlerausgang 27 besitzt. Über eine Taste 28 ist der Fehler-Flip-Flop 26 rücksetzbar.

Parallel zu der Fehlerkoinzidenzschaltung 20 liegt eine Umschaltkoinzidenzschaltung 22 an den n-Ausgängen des Impulszählers 19. Die weiteren Eingänge der Koinzidenzschaltung 22 sind mit einem Umschaltfestwertspeicher 23 verbunden. Der Ausgang der Umschaltkoinzidenzschaltung 22 ist mit einem ersten Eingang einer Oder-Schaltung 29 verbunden, an deren zweiten Eingang der Ausgang des Warngebietsdecoders 9 und an deren dritten Eingang der Ausgang eines zweiten Zeitgebers 30 über eine Inverterstufe 31 angeschlossen ist.

Der Reseteingang des Zeitgebers 30 ist über eine Torschaltung 32 einerseits mit dem Ausgang der Umschaltkoinzidenzschaltung 22 und andererseits mit dem Ausgang eines Speicher-Flip-Flops 33 verbunden, dessen Seteingang ebenfalls mit dem Ausgang der Koinzidenzschaltung 22 verbunden ist und dessen Übernahmeeingang an den Ausgang des dem vierten Block zugeordneten Takttores 13 angeschlossen ist.

Schließlich ist der Reseteingang des ersten Zeitgebers 16 und des Impulszählers 19 auch über das Oder-Tor 15 von einem Taster 34 aus ansteuerbar.

Die somit beschriebene Schaltung arbeitet in folgender Weise.

Der Blockdecoder 6 liefert an den Ausgängen bₒ und bₙ bei jedem Datenblock, gleichgültig welcher Gruppe er zugeordnet ist, ein Taktsignal und die zugehörige Blocknummer, so daß ständig nacheinander an jedem der Takttore 10 - 13 ein Taktimpuls auftritt, unabhängig von der Datengruppe, die gerade übertragen wird.

Der zum ersten Block gehörige Taktimpuls vom Takttor 10 setzt stets das Steuer-Flip-Flop 14 zurück. Wenn dann im zweiten Block die Gruppen-Nr. 1A erscheint, wird mit dem dem zweiten Block zugeordneten Taktimpuls aus dem Takttor 11 das Ausgangssignal der Torschaltung 7 in den Steuer-Flip-Flop 14 übernommen und an das Undtor 8 weitergegeben.

Wenn in dem dritten Block von dem Ausgang a₁₅ ein Auswertebit an die Torschaltung 8 geliefert wird und außerdem an den Ausgängen a₈ bis a₁₁ des Blockdecoders eine Information ansteht, welche mit der im Festwertspeicher des Decoders 9 für das Warngebiet gespeicherten Warngebietskennung übereinstimmt, dann wird durch den dem dritten Block zugeordneten Taktimpuls aus dem Takttor 12 der erste Zeitgeber 16 zurückgesetzt. Die Rücksetzung des Zeitgebers 16 bewirkt, daß seine Standzeit wieder bei Null abzulaufen beginnt.

Das Zurücksetzen des Zeitgebers besagt, daß der eingestellte Sender ein Warnfunksender ist, der speziell auf das im Decoder 9 festgelegte Warngebiet zugeschnittene Warnsendungen überträgt.

Fehlt jedoch ein Signal am Ausgang des Decoders 9, so wird der Taktimpuls aus dem Takttor 12 nicht als Rücksetzimpuls für den Zeitgeber weitergeleitet. Damit wird der Ablauf seiner Standzeit nicht unterbrochen. Nach Ablauf der Standzeit des Zeitgebers 16 erscheint an dessen Ausgang ein Signal, das über die Startschaltung 17 einen Sendersuchlauf im Tuner 2 veranlaßt.

Der Ausgang des Zeitgebers 16 ist zudem auf den Haltesignaleingang des Zeitgebers 16 zurückgekoppelt, so daß der Zeitgeber nach der Auslösung eines Suchlaufs stehenbleibt. Der eingeleitete Suchlaufzustand der Startschaltung 17 wird solange aufrecht erhalten, bis wieder ein Resetimpuls am Eingang des Zeitgebers 16 erscheint und kann eine größere Anzahl von Suchlaufzyklen andauern.

Wird während eines Suchlaufzyklus kein anderer dem Warngebiet zugeordneter Warnfunksender aufgefunden, gibt also der Decoder 9 kein Signal ab, dann wird der Suchlaufzyklus sooft wiederholt, bis der Impulszähler 19 die im Umschaltfestwertspeicher 23 vorgegebene Zahl erreicht hat.

Bei dem darauf folgenden nächsten Suchlaufzyklus wird der Suchlauf in dem Augenblick gestoppt, wenn der gefundene Sender einzig am Ausgang a₁₅ des Blockdecoders im dritten Block der Datengruppe 1A ein Auswertebit liefert, also gleichgültig, welche Warngebietskennung der Decoder 9 erkennt.

Damit ist die Empfangsbereitschaft des Warnfunkempfängers bewiesen, wenn kein für sein Warngebiet zuständiger Sender auffindbar ist.

Der Nachweis der Empfangsbereitschaft des Warnfunkempfängers wird dadurch bewerkstelligt, daß der Ausgang der Umschaltkoinzidenzstufe 22, die das Erreichen der vorgegebenen Zahl ergebnisloser Suchlaufzyklen anzeigt, in einem Odertor 29 mit dem Ausgang des Decoders 9 zusammengefaßt ist. Sobald ein Signal am Ausgang der Umschaltkoinzidenzstufe 21 erscheint, tritt dessen Signal zur Freigabe der Torschaltung 8 an die Stelle des Decodersignals 9 und beim nächsten Taktimpuls aus dem Takttor 12 erhält der Zeitgeber wieder einen Rückstellimpuls.

Wird auch bei diesen Suchläufen nach anderen Warngebieten zugeordneten Warnfunksendern kein solcher gefunden, bleibt die Startschaltung 17 für den Suchlauf eingeschaltet und der Impulszähler erhält weitere Impulse, bis die im Fehlerfestwertspeicher 21 gespeicherte Anzahl erreicht ist. Die Fehlerkoinzidenzschaltung 20, an die der Festwertspeicher 21 und der Ausgang des Impulszählers angeschlossen sind, liefert dann über die Undstufe 18 ein Sperrsignal für den Impulszählereingang und ein Fehleranzeigesignal am Fehlerausgang 25. Der Fehlerzustand kann im Fehlerspeicher 26 gespeichert werden.

Ist ein Fehler angezeigt, dann muß nach der Fehlerbeseitigung später die Empfangsbereitschaftskontrolleinrichtung über den Taster 34 wieder angeworfen werden. Dadurch erhält der Zeitgeber 16 über die Oder-Schaltung 15 einen Rücksetzimpuls.

Dieser Rücksetzimpuls wird aber zugleich dem Rücksetzeingang des Impulszählers zugeführt, der dadurch auf Null zurückgesetzt wird. Damit ist für beide Koinzidenzschaltungen 20 und 22 die Übereinstimmung zwischen dem Impulszählerstand und dem gespeicherten Festwert entfallen und beide Schaltungen können kein Ausgangssignal mehr liefern. Damit ist der Ausgangszustand der bisher beschriebenen Schaltung wieder erreicht.

Ist in dem bisher beschriebenen Arbeitsablauf ein Sender eingestellt, der einem anderen Warngebiet zugeordnet ist, dann veranlaßt dessen Empfang sofort wieder ein Zurückschalten des Empfängers auf den Empfang eines Senders, der dem eingespeicherten Warngebiet zugeordnet ist. Nun ist aber der andere Sender erst nach mehreren vergeblichen, auf einen Warngebiet zugeordneten Warnfunksender gerichteten Suchlauf eingestellt worden. Darum sollte er nicht zu schnell wieder verlassen werden.

Dazu ist der zweite Zeitgeber 30 vorgesehen. Dieser wird über seinen Reseteingang eingeschaltet, wenn am Ausgang der Umschaltkoinzidenzschaltung 22 ein Signal erscheint, und nach diesem Ereignis der nächste Taktimpuls aus dem Takttor 13, der dem vierten Block zugeordnet ist, auftritt.

Während der Standzeit des zweiten Zeitgebers 30 bleibt über die Inverterstufe 31 und das Odertor 29 der diesem zugeordnete Eingang der Undtorschaltung 8 belegt, so daß der erste Zeitgeber während dessen Standzeit durch jeden Taktimpuls aus dem Takttor 12 zurückgesetzt wird.

## Patentansprüche

1. Einrichtung zur Empfangsbereitschaftskontrolle von Warnfunkempfängern, die neben einem Decoder (6) für eine Warnmeldungskennung einen Kennungsdecoder (9) für eine andere, diskontinuierlich ausgesandte Kennung der Warnfunksender aufweisen, mit einem durch den Kennungsdecoder (9) rückstellbaren Zeitgeber (16) vorgegebener Standzeit, nach deren Ablauf eine Fehleranzeige wirksam schaltbar ist,
dadurch gekennzeichnet,
daß zwischen dem Zeitgeber (16) und der Fehleranzeige (24 bis 28) eine Sendersuchlaufschaltung (17) mit einem Impulszähler (19) eingefügt ist, der die Zahl ergebnisloser Suchlaufzyklen zählt und die Fehleranzeige auslöst, wenn eine vorgegebene Zahl von Suchlaufzyklen überschritten ist.

2. Einrichtung nach Anspruch 1,
dadurch gekennzeichnet,
daß der Eingang des Impulszählers (19) mit einem Endimpulsausgang der Sendersuchlaufschaltung (17) verbunden ist, und die Ausgänge des Impulszählers mit ersten Eingängen einer Fehler-Koinzidenzschaltung (20) verbunden sind, daß deren zweite Eingänge an einen Festwertfehlerspeicher (21) angeschlossen sind und daß der Ausgang der Koinzidenzfehlerschaltung (20) mit einer einen manuell rückstellbaren Speicher (26) umfassenden Fehleranzeige (24 bis 28) verbunden ist.

3. Einrichtung nach Anspruch 1 oder 2,
dadurch gekennzeichnet,
daß die Einrichtung nach einer vorgegebenen Anzahl ergebnisloser Suchläufe auf den Empfang eines Senders ohne andere Kennung umschaltbar und nach einem einmaligen Empfang eines solchen Senders auf den Empfang eines Senders, der die andere Kennung überträgt, rückstellbar ist.

4. Einrichtung nach Anspruch 3,
dadurch gekennzeichnet,
daß der Reseteingang des Impulszählers (19) parallel zum Reseteingang des Zeitgebers (16) geschaltet ist, daß die Ausgänge des Impulszählers (19) mit ersten Eingängen einer Umschalt-Koinzidenzschaltung (22) verbunden sind, daß die zweiten Eingänge der Umschalt-Koinzidenzschaltung (22) an einen weiteren Umschalt-Festwertspeicher (23) angeschlossen sind und daß der Ausgang der Umschalt-Koinzidenzschaltung mit dem Ausgang des Kennungsdecoders (9) in einer Oder-Schaltung (29) zusammengefaßt ist.

5. Einrichtung nach Anspruch (4),
dadurch gekennzeichnet,
daß das Ausgangssignal der weiteren Koinzidenzschaltung einen zweiten Zeitgeber (30) rücksetzt, dessen Ausgang mit einem weiteren Eingang der Oder-Schaltung (29) verbunden ist.

## Claims

1. Device for monitoring the reception capacity of radio alarm receivers which, in addition to a decoder (6) for an alarm identification, have an identification decoder (9) for another identification of the radio alarm transmitters which is transmitted discontinuously, having a timer (16), which can be reset by the identification decoder (9), with a prescribed useful life, after the expiry of which a fault indication can be activated, characterized in that a transmitter search run circuit (17) with a pulse counter (19) is inserted between the timer (16) and the fault display (24 to 28), which pulse counter (19) counts the number of search run cycles without a result and triggers the fault display when a prescribed number of search run cycles has been exceeded.

2. Device according to Claim 1, characterized in that the input of the pulse counter (19) is connected to a final pulse output of the transmitter search run circuit (17), and the outputs of the pulse counter are connected to first inputs of a fault coincidence circuit (20), in that the second inputs of the latter are connected to a read-only fault memory (21), and in that the output of the coincidence fault circuit (20) is connected to a fault indicator (24 to 28) which comprises a manually resettable memory (26).

3. Device according to Claim 1 or 2, characterized in that, after a prescribed number of search runs without a result, the device can be switched over to the reception of a transmitter without another identification and, after a single reception of such a transmitter, can be reset to the reception of a transmitter which transmits the other identification.

4. Device according to Claim 3, characterized in that the reset input of the pulse counter (19) is switched parallel to the reset input of the timer (16), in that the outputs of the pulse counter (19) are connected to first inputs of a switch-over coincidence circuit (22), in that the second inputs of the switch-over coincidence circuit (22) are connected to a further switch-over read-only memory (23), and in that the output of the switch-over coincidence circuit is combined with the output of the identification decoder (9) in an OR circuit (29).

5. Device according to Claim 4, characterized in that the output signal of the further coincidence circuit resets a second timer (30) whose output is connected to a further input of the OR circuit (29).

## Revendications

1. Installation pour le contrôle de la disponibilité en réception d'un récepteur d'alerte comprenant en plus d'un décodeur (6) pour détecter un signal d'alerte, un décodeur caractéristique (9) pour une autre caractéristique de l'émetteur d'alerte, émise de manière discontinue, avec une horloge à temps d'attente prédéterminé, (16), et qui peut être remise à l'état initial par le décodeur de caractéristiques (9), temps d'attente après lequel un affichage de défaut est mis en oeuvre, caractérisée en ce qu'entre l'horloge (16) et l'affichage de défaut (24-28), se trouve un circuit de recherche d'émetteur (17) avec un compteur d'impulsions (19) qui compte le nombre de cycles de recherche n'ayant pas donné de résultat et déclenche l'affichage d'erreur lorsqu'un nombre prédéterminé de cycles de recherche est dépassé.

2. Installation selon la revendication 1, caractérisée en ce que l'entrée du compteur d'impulsions (19) est reliée à une sortie d'impulsion finale du circuit de recherche d'émetteur (17) et les sorties des compteurs d'impulsions sont reliées aux premières entrées d'un circuit de coïncidence d'erreur (20) dont la seconde entrée est reliée à une mémoire morte (21), la sortie du circuit de défaut de coïncidence (20) étant reliée à une mémoire (26) à commande manuelle susceptible d'être remise à l'état initial, comprenant le dispositif d'affichage de défaut (24-28).

3. Installation selon la revendication 1 ou 2, caractérisée en ce qu'après un nombre prédéterminé de recherches infructueuses l'installation commute sur un émetteur sans caractéristique et après une première réception d'un tel émetteur, l'installation est remise à l'état initial sur la réception d'un émetteur qui transmet l'autre caractéristique.

4. Installation selon la revendication 3, caractérisée en ce que l'entrée de remise à l'état initial du compteur d'impulsions (19) est branché en parallèle sur l'entrée de remise à l'état initial de l'horloge (16), les sorties des compteurs d'impulsions (19) étant reliées à une première entrée d'un circuit de coïncidence (22) dont la seconde entrée est reliée à une autre mémoire morte de commutation (23) et la sortie du circuit de coïncidence de commutation est reliée à la sortie du décodeur de caractéristiques (9) dans une porte OU (29).

5. Installation selon la revendication 4, caractérisé en ce que le signal de sortie de l'autre circuit de coïncidence remet à l'état initial une seconde horloge (30) dont la sortie est reliée à une autre entrée de la porte OU (29).
